# FASCICULE DE BREVET EUROPEEN

(11) **EP 3 649 000 B1**
(45) Date de publication et mention de la délivrance du brevet: **13.07.2022**
(21) Numéro de dépôt: 18765697.0
(22) Date de dépôt: 09.08.2018
(51) Int. Cl.: B60K 11/08

(54) **VOLET D'OBTURATION POUR DISPOSITIF DE RÉGULATION D'UN FLUX D'AIR POUR MODULE DE FACE AVANT POUR VÉHICULE AUTOMOBILE**
VERSCHLUSSKLAPPE FÜR EINE VORRICHTUNG ZUR REGELUNG EINES LUFTSTROMS FÜR EIN VORBAUMODUL EINES KRAFTFAHRZEUGS
SHUTTER FLAP FOR A DEVICE FOR REGULATING AN AIR FLOW FOR A MOTOR VEHICLE FRONT END MODULE

(30) Priorité: 01.09.2017 FR 1758079
(43) Date de publication de la demande: 13.05.2020
(73) Titulaire: Valeo Systemes Thermiques, 78322 Le Mesnil Saint-Denis (FR)
(72) Inventeur: MITIDIERI, Enzo, 78322 Le Mesnil Saint Denis Cédex (FR); NORÉ, Thomas, 78322 Le Mesnil Saint Denis Cédex (FR)
(74) Mandataire: Valeo Systèmes Thermiques
(86) Numéro de dépôt international: PCT/FR2018/052046
(87) Numéro de publication internationale: WO 2019/043315

(56) Documents cités:
- EP-A1- 1 522 448
- EP-A1- 2 641 768
- EP-A1- 3 002 145
- EP-A1- 3 427 988
- DE-A1-102011 078 691
- DE-A1-102013 200 939
- US-A1- 2014 308 890

## Description

L'invention a pour objet un volet d'obturation pour dispositif de régulation d'un flux d'air pour module de face avant pour véhicule automobile. L'invention concerne également le dispositif de régulation d'un flux d'air pour une entrée d'air pour un module de face avant pour un véhicule automobile comportant un tel volet d'obturation, également appelé obturateur actif de calandre, ou encore dispositif de contrôle d'entrée d'air. Un tel dispositif est parfois désigné par l'acronyme AGS, provenant de l'expression de langue anglaise "Active Grille Shutter" (obturateur actif de calandre). L'invention concerne également le module de face avant pour véhicule automobile comprenant un tel dispositif de régulation d'un flux d'air.

L'aérodynamisme d'un véhicule automobile est une caractéristique importante car il influence notamment la consommation de carburant (et donc la pollution) ainsi que les performances dudit véhicule. Ceci est particulièrement important lorsque le véhicule automobile se déplace à haute vitesse.

Un dispositif de régulation d'un flux d'air pour module de face avant permet d'ouvrir ou de fermer l'accès de l'air via une calandre du véhicule automobile. En position ouverte, l'air peut circuler à travers la calandre et participer au refroidissement du moteur du véhicule automobile. En position fermée, l'air ne pénètre pas via la calandre ce qui réduit la trainée et permet ainsi de réduire la consommation de carburant et l'émission de CO₂. L'AGS permet donc de réduire la consommation d'énergie et la pollution lorsque le moteur n'a pas besoin d'être refroidi par l'air extérieur.

Un dispositif de régulation d'un flux d'air pour module de face avant comprend habituellement des volets d'obturation pilotés par un actionneur en face avant afin de réduire le coefficient de traînée et aussi d'améliorer les performances de refroidissement et de climatisation. Les documents EP 2 641 768, DE 10 2013 200939, US 2014/308890, EP 3 002 145, EP 1 522 448, DE 10 2011 078691 décrivent de tels dispositifs. Ils comprennent des volets mobiles en rotation avec des systèmes de transmission du couple de rotation, pour certains comprenant des perçages au niveau du tourillon du volet.

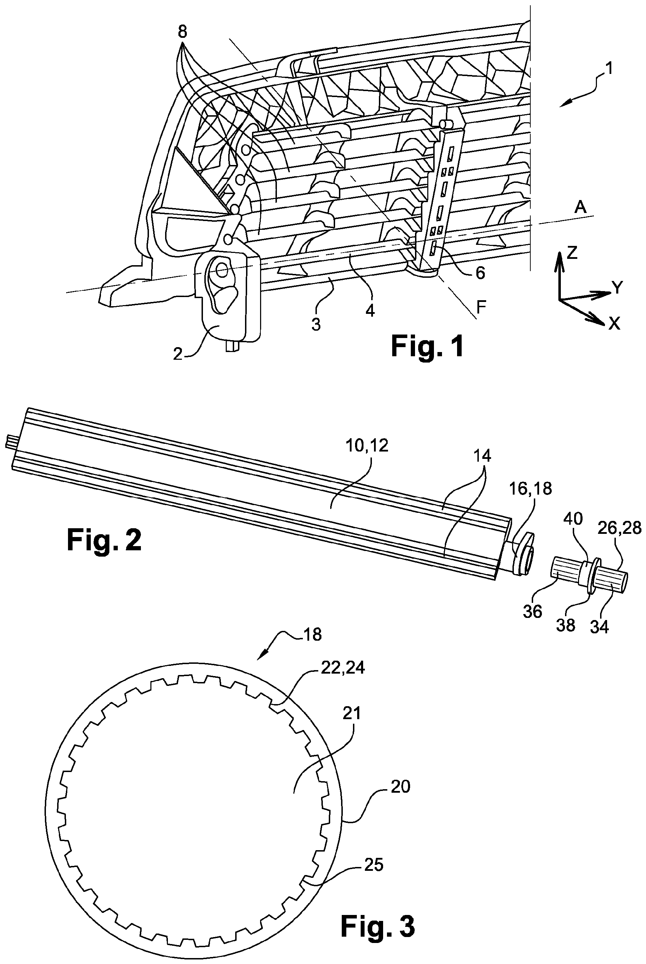

Les dispositifs de régulation d'un flux d'air comprennent donc un actionneur pour piloter la rotation des volets d'obturation. La figure 1 illustre un dispositif de régulation d'un flux d'air selon l'art antérieur. Ici, un dispositif 1 de contrôle de volet d'obturation comprend un cadre support 3 portant un ensemble de volet d'obturation avec un actionneur 2 qui pilote un volet d'obturation 4 ici dit de commande entre une position extrême ouverte et une position extrême fermée. L'actionneur 2 pilote également la rotation de volets d'obturation dits secondaires 8. L'actionneur 2 entraîne les volets d'obturation 4 de commande et secondaires 8 selon un même mouvement rotatif défini autour d'un axe de rotation représenté par l'axe A.

Lorsque les volets d'obturation 4 sont en position ouverte comme représenté sur la figure 1, à savoir qu'ils s'étendent selon une direction longitudinale (x) et transversale (y) par rapport aux axes du véhicule, l'entrée d'air est dégagée et le flux d'air extérieur peut passer à travers le passage du cadre 3 selon la flèche F. Lorsque les volets d'obturation 4 sont en position fermée, c'est-à-dire qu'ils s'étendent selon une direction transversale (y) et vertical (z) par rapport aux axes du véhicule, l'entrée d'air est obstruée et l'air ne peut pas franchir le cadre 3.

Dans le dispositif illustré à la Figure 1, les volets d'obturation 4 sont reliés les uns aux autres par l'intermédiaire d'un connecteur 6, généralement réalisé sous la forme d'une bielle mobile qui se déplace selon un mouvement de translation haut/bas.

L'actionneur 2 sous l'effet d'une commande qui peut être pneumatique, électrique et/ou mécanique, actionne la rotation du volet d'obturation 4 de commande selon un axe A. Le volet d'obturation 4 de commande est alors entraîné par pivotement selon un angle défini, par exemple compris dans une gamme allant de 0 à 90°. Le volet d'obturation 4 pourra adopter deux positions extrêmes dites ouverte et fermée ainsi que toute position intermédiaire.

Le volet d'obturation 4 dit de commande, suite à sa rotation provoquée par l'actionneur 2, entraîne la translation de l'élément connecteur 6 vers le bas ou vers le haut selon l'axe vertical (z) du véhicule. Le connecteur 6, en se déplaçant entraîne la rotation simultanée de chaque volet d'obturation dit secondaire 8 qui adoptent le même mouvement de rotation que le volet d'obturation 4 dit de commande.

Il apparait ici que le volet d'obturation 4 dit de commande correspond à tout volet d'obturation se situant entre l'actionneur 2 et le connecteur 6, tandis que le volet d'obturation dit secondaire 8 correspond à tout volet d'obturation se situant entre le connecteur 6 et le cadre 3. En d'autres termes, le volet d'obturation 4 dit de commande correspond au volet d'obturation directement en prise, ou en interaction, avec l'actionneur.

Toutefois le volet d'obturation 4 dit de commande est soumis à des contraintes en termes de torsion qui sont plus importantes que les volets d'obturation secondaires 6. C'est pour cette raison que les volets d'obturation dit de commande sont réalisés dans des matériaux plus résistants, tels que du Polyamide-6 Fibres de Verre 50% (PA6 GF50), tandis que les volets d'obturation secondaires sont fabriqués dans des matériaux un peu moins résistants tels que du Polyamide-6 Fibres de verre 30% (PA GF30).

Toutefois un tel dispositif de régulation d'entré d'air requiert des étapes de procédé additionnelles et engendre des problèmes d'assemblage par exemple si un volet d'obturation en PA GF30 venait à être agencé entre l'actionneur et le connecteur. Il serait donc plus opportun en termes de standardisation et de sécurité d'avoir des volets d'obturation de commande et secondaires réalisé dans un même matériau.

La présente invention cherche à surmonter cet inconvénient et propose un volet d'obturation selon la revendication 1.

Avec un élément de liaison qui s'étend sur la surface interne du tourillon de pivotement, la force émise par l'actionneur est mieux répartie à travers le tourillon de pivotement limitant ainsi les efforts en torsion sur le volet d'obturation. Il est donc possible de fabriquer des volets d'obturation dans un même et seul matériau.

D'autres modes de réalisation proposent que :
- le tourillon de pivotement comprend sur sa surface externe un élément de connexion pour accueillir une bielle ;
- l'élément de connexion comprend une nervure ou une rainure, la bielle pouvant comprendre une rainure ou une nervure de forme complémentaire à l'élément de connexion ;
- le tourillon de pivotement comprend en outre sur sa surface externe un élément de liaison agencé pour lier en rotation le panneau avec un organe d'entraînement ;
- le panneau du volet d'obturation comprend au moins une cavité interne.

L'invention concerne également un dispositif de régulation d'un flux d'air pour module de face avant pour véhicule automobile comprenant :
- au moins un volet d'obturation tel que décrit précédemment,
- un actionneur comprenant au moins un organe rotatif de sortie comprenant une cavité,
- un levier comprenant une première partie apte à être inséré dans ladite cavité et être ainsi relié audit organe rotatif de sortie de sorte à être entraîné en rotation par ledit organe rotatif de sortie,
Selon l'invention, le levier comprend une deuxième partie apte à être introduite dans le creux d'un tourillon de pivotement de manière à entrainer la rotation dudit volet d'obturation. D'autres modes de réalisation proposent que :
- la première partie et la seconde partie du levier sont de formes différentes, que ce soit la longueur, la surface externe de chaque partie, etc. ;
- la première partie et la deuxième partie du levier présentent chacune des dentures sur leur surface externes et sont séparées par une collerette ;
- le levier comprend une troisième partie dépourvue de denture, c'est-à-dire uniforme ou encore lisse, agencée entre la première partie et la deuxième partie ;
- l'actionneur comprend deux organes rotatifs de sortie, chacun comprenant une cavité, disposés sur des faces opposées dudit actionneur, le dispositif comprenant un unique levier traversant lesdites cavités qui soit apte à être introduit dans le creux d'un tourillon de pivotement de manière à entrainer la rotation simultanée de deux volets d'obturation ;
- l'actionneur comprend au moins deux organes rotatifs de sortie, chacun comprenant une cavité, le dispositif comprenant au moins deux leviers chacun étant apte à être introduit dans une cavité d'un organe rotatif de sortie et chacun étant apte à être introduit dans un creux d'un tourillon de pivotement de manière à entrainer la rotation simultanée de au moins deux volets d'obturation ;
- les leviers sont fixés l'un à l'autre par une fixation à emboîtage élastique ;
- les volets d'obturation sont tous de forme identique et réalisés dans une même matière, notamment en Polyamide-6 Fibres de verre 30% (PA6GF30).

D'autres caractéristiques et avantages de l'invention apparaîtront à la lecture de la description qui va suivre. Celle-ci est purement illustrative et doit être lue en regard des dessins annexés sur lesquels :
- la figure 1 illustre une partie du dispositif de régulation d'un flux d'air selon l'art antérieur selon une vue en perspective ;
- la figure 2 illustre un volet d'obturation selon l'invention selon une vue en perspective ;
- la figure 3 illustre une partie du volet d'obturation selon l'invention selon une vue de profil ;
- la figure 4 illustre une partie du dispositif de régulation d'un flux d'air selon l'invention selon une vue en perspective ;
- la figure 5 illustre une partie du dispositif de régulation d'un flux d'air selon un mode de réalisation selon une vue en perspective ;
- les figures 6 et 7 illustrent une partie du dispositif de régulation d'un flux d'air selon un autre mode de réalisation selon une vue en perspective.

Sur ces figures, les éléments identiques portent les mêmes références indifféremment que ce soit selon l'art antérieur ou selon l'invention.

La figure 1 illustre en partie un dispositif de régulation 1 d'un flux d'air selon l'air antérieur selon une vue en perspective. Le dispositif de régulation 1 et les volets d'obturation 4 s'étendent selon une direction longitudinale (X), transversale (Y) et verticale (Z), par exemple par rapport aux axes du véhicule, comme représenté par les axes sur la figure 1.

Les réalisations suivantes sont des exemples donnés à titre d'illustration de l'objet de l'invention. L'invention n'est pas limitée à ces modes de réalisation. Bien que la description se réfère à un ou plusieurs modes de réalisation, ceci ne signifie pas nécessairement que chaque référence concerne le même mode de réalisation, ou que les caractéristiques s'appliquent seulement à un mode de réalisation. De simples caractéristiques de différents modes de réalisation peuvent également être combinées ou interchangées pour fournir d'autres réalisations.

La figure 2 représente un volet d'obturation 4 selon l'invention comprenant un panneau 10 qui est constitué d'ici d'une partie rectangulaire plane 12 inscrit dans un seul plan et de deux nervures de renforcement 14.

Bien évidement, l'invention ne se limite pas à la forme du panneau 10. Le panneau 10 peut être de forme plane mais également de forme galbée afin de mieux épouser la forme de la calandre du véhicule.

Nous pouvons envisager selon un mode de réalisation non illustré un volet d'obturation avec une partie plane centrale située entre les deux autres parties planes extrémales chacune étant située à une extrémité longitudinale du volet d'obturation. La partie plane centrale est reliée à chaque partie plane extrémale par un tronçon incliné, autrement appelé rampe, de manière à ce que la partie plane centrale soit décalée verticalement (Z) par rapport aux deux parties planes extrémales. Autrement dit, le volet d'obturation, et en particulier le panneau, ont une section de profil en oméga. En d'autres termes, les parties planes extrémales sont agencées dans un même plan tandis que la partie plane centrale est agencée dans un plan distinct et parallèle au plan des parties planes extrémales.

Par rapport à l'écoulement du flux d'air F, qui est illustré ici par l'axe F, le volet d'obturation 4 est configuré de sorte que la première partie plane extrémale soit destinée à être traversée par le flux d'air F. La première partie plane extrémale correspond au bord d'attaque qui est plan. La seconde et dernière partie plane extrémale destinée à être traversée par le flux d'air F correspond au bord de fuite qui est plan. Le volet d'obturation 4 comprend en outre un axe de rotation 16 agencé ici au niveau de la partie centrale du volet d'obturation afin de permettre le pivotement du volet d'obturation 4 autour de cet axe de rotation 16.

L'axe de rotation 16 de chaque volet d'obturation 4 permet, par rotation, d'ouvrir et de fermer ledit volet d'obturation. Ouvrir un volet d'obturation 4 revient à le placer (par rotation) de manière à ce qu'il s'oppose le moins possible au passage du flux d'air F tout en l'orientant de manière appropriée, par exemple de manière horizontale. Fermer un volet d'obturation 4 revient à le placer, par exemple verticalement, de manière à ce qu'il s'oppose au maximum à l'écoulement du flux d'air F, en coopération avec les autres volets d'obturation 4. Lesdits axes de rotation 16 des volets d'obturation 4 sont parallèles les uns aux autres. Ainsi, les rotations appliquées à tous les volets d'obturation 4 sont toutes des rotations selon un même axe, à une translation près.

Pour pivoter, chaque volet d'obturation 4 comprend un axe de rotation 16 qui comprend un tourillon de pivotement 18 de forme sensiblement cylindrique, en d'autres termes ayant une partie cylindrique autour de laquelle le volet d'obturation 2 reçoit un mouvement de rotation. Selon l'invention, le tourillon de pivotement 18, solidaire au panneau 10, comprend un creux 21 de manière à avoir une surface externe 20 et une surface interne 22, comme illustrée sur la figure 3. Les surfaces externe 20 et interne 22 ont un profil de section de profil de forme circulaire, le cercle représentant la surface interne 22 étant de rayon inférieur à celui représentant la surface externe 20 de manière à ce que l'un soit imbriqué dans l'autre. Bien évidemment, des formes ellipsoïdales ou rectangulaires peuvent également être utilisées. La surface interne 22 présente un élément de liaison 24 configuré pour lier en rotation le panneau 10 avec un organe d'entraînement 26 qui sera décrit ultérieurement. L'élément de liaison 24 comprend ici une pluralité de dentures 25, en d'autres termes un jeu d'engrenage, une pluralité de créneaux ou de crans, ou encore d'une succession d'évidements et de dents, réalisés au sein de la surface interne 22 du tourillon de pivotement 18. L'élément de liaison 24 peut également comprendre une pluralité de pignons faisant saillie de la section de profil circulaire de la surface interne 22. Comme illustré sur la figure 3, la pluralité de dentures 25 peut être agencée de manière discontinue avec des dents de dimensions différentes, ou la pluralité de dentures 25 peut être agencée de manière continue et régulière avec des dents de dimension identique et répartie de manière homogène et régulière. Le tourillon de pivotement 18 et le panneau 10 peuvent être formés d'un seul tenant de manière à former continuité de matière par exemple si le volet est issu d'un procédé de moulage. Le tourillon de pivotement 18 peut être un embout rapporté sur le panneau 10, par exemple lorsque le volet est issu d'un procédé d'extrusion.

L'organe d'entraînement 26 présente une forme complémentaire à l'élément de liaison 24, autrement dit, l'élément de liaison 24 et l'organe d'entrainement 26 sont de forme complémentaire, de manière à ce que la rotation de l'organe d'entraînement 26 induise la rotation de l'élément de liaison 24 ainsi que celles du tourillon de pivotement 18 et du panneau 10. L'élément de liaison 24 peut revêtir différentes formes lui permettant de coopérer avec l'organe d'entraiment 26. A titre d'exemple, l'élément de liaison 24 peut être de forme ronde avec une marche venant en appui sur une autre marche agencée sur l'organe d'entraînement 26. L'élément de liaison 24 peut également comprendre une ou plusieurs butées ou nervures faisant saillies de la surface interne 22 venant au sein d'une ou plusieurs rainures agencées au sein de l'organe d'entraînement 26. Il en est de même avec un ensemble de crémaillère - pignon étant respectivement agencé sur l'élément de liaison 24 et sur l'organe d'entraînement 26 et vice-versa.

L'organe d'entraînement 26 correspond à une partie, ou extrémité, d'un levier 28 destinée à coopérer avec l'élément de liaison 24. L'autre extrémité du levier 28 étant en prise avec l'actionneur 2 comme il sera expliqué ci-dessous.

L'invention porte également sur un dispositif de régulation 1 d'un flux d'air pour une entrée d'air d'un module de face avant pour véhicule automobile comprenant :
- au moins un volet d'obturation 4 tel que décrit précédemment,
- un actionneur 2 comprenant au moins un organe rotatif de sortie 30 comprenant une cavité 32,
- un levier 28 comprenant une première partie 34 apte à être insérée dans ladite cavité 32 et être ainsi relié audit organe rotatif de sortie 30 de sorte à être entraîné en rotation par lesdits organes rotatifs de sortie 30.

Selon l'invention, le levier 28 comprend une deuxième partie 36 apte à être introduite dans le creux 21 d'un tourillon de pivotement 18 de manière à entrainer la rotation dudit volet d'obturation 4.

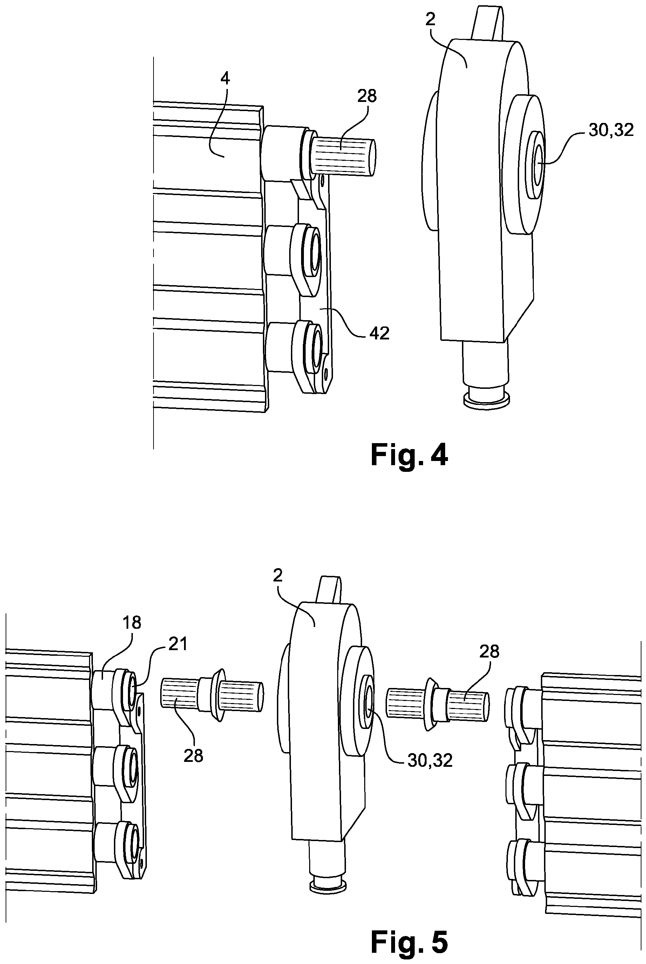

L'actionneur 2, comme illustré à la figure 4, correspond à un dispositif électronique pouvant envoyer une commande pneumatique, électrique et/ou mécanique. L'actionneur 2 par l'intermédiaire d'un ensemble moteur est apte à piloter la rotation d'un organe rotatif de sortie 30.

L'organe rotatif de sortie 30 de l'actionneur 2, sous l'influence d'une commande de l'actionneur 2, est entrainé en rotation, ceci provoque par complémentarité de forme le pivotement du levier 28 qui à son tour entraine la rotation du tourillon de pivotement 18 et du volet d'obturation 4 par extension.

Les volets d'obturation 4 sont liés entre eux par une bielle 42 comme illustré en figure 4, si bien que la rotation d'un volet d'obturation 4 entraine le pivotement des autres volets d'obturation 4 simultanément. Il n'y a donc pas besoin d'agencer un bras de levier à chaque volet d'obturation 4 pour relier celui-ci à la bielle 42.

L'invention ne se limite pas à la forme du levier 28. Le levier 28 tel qu'illustré en figure 2 et 4 correspond à un élément de forme sensiblement cylindrique présentant une première partie 34 et deuxième partie 36 agencées de part et d'autre aux extrémités opposées du levier 28, selon le sens longitudinal du levier 28. La première partie 34 est de forme complémentaire à l'organe rotatif de sortie 30 et notamment à la cavité 32 de sorte à être entraîné en rotation par l'organe rotatif de sortie 30 de l'actionneur 2. La deuxième partie 36 est de forme complémentaire à l'élément de liaison 24 et notamment au creux 21 du tourillon de pivotement 18 de manière à entrainer la rotation dudit volet d'obturation 4. Ainsi, le levier 28 est apte à être introduit, autrement dit inséré, d'une part dans l'élément de liaison 24 et d'autre part dans la cavité 32 de l'organe rotatif 30 de sortie de l'actionneur 2.

Nous pouvons envisager, selon un mode de réalisation non illustré que le levier 28 présente une forme tubulaire creuse avec une surface interne présentant des dentures de manière à coopérer ou interagir avec l'élément de liaison 24 et l'organe rotatif de sortie 30. Pour cela l'élément de liaison 24 et l'organe rotatif de sortie 30 présentent des dentures de forme complémentaire à la surface interne dudit levier 28 agencés sur leur surface externe de manière à permettre un emboitement entre l'élément de liaison 24 et l'organe rotatif 30 et le levier 28 par complémentarité de forme.

Selon un autre mode de réalisation du levier, la première partie 34 et la seconde partie 36 du levier 28 peuvent être de formes différentes. Par exemple, les deux parties peuvent avoir une répartition des dentures différente, un diamètre différent, un moyen détrompeur (plus connu sous l'appellation poka-yoke) sur une des parties et pas l'autre, etc.

Le levier 28 peut comprendre d'autres formes de section transversale telles qu'une section circulaire, ovale, semi-elliptique, rectangulaire, carrée, en forme de diamant, à titre d'exemples non-limitatifs.

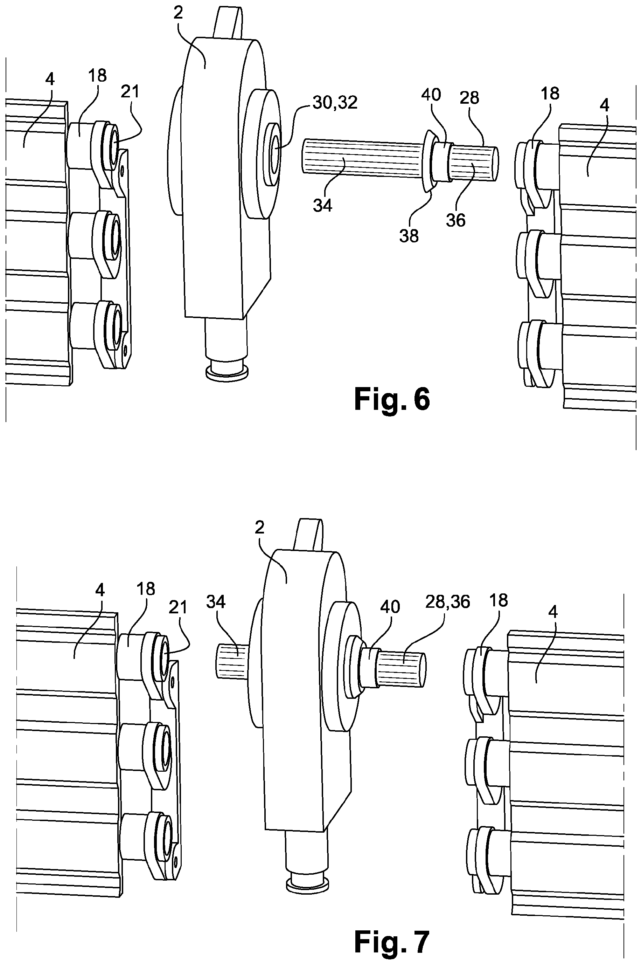

Comme illustré sur la figure 2, la première partie 34 et la seconde partie 36 du levier 28 présentent chacun des dentures sur leur surface extérieure et sont séparées par une collerette 38 faisant saillie du levier 28. La collerette 38 peut servir comme un élément de butée où, par exemple, la première partie 34 du levier 28 est introduite dans la cavité 32 de l'organe rotatif de sortie 30 de l'actionneur 2 jusqu'à ce que la collerette 38 viennent en butée contre l'actionneur 2, puis la deuxième partie 36 du levier 28 est ensuite introduite dans le tourillon de pivotement 18 facilitant ainsi l'assemblage du dispositif de régulation 1. La collerette 38 permet également d'assurer l'étanchéité de l'ensemble et qu'il n'y ait pas de corps externe pénétrant au sein de l'organe rotatif de sortie 30 de l'actionneur 2 comme illustré en figure 7.

Comme illustré sur la figure 2, le levier 28 peut également comprendre une troisième partie 40 de surface lisse ou dénudée de denture agencée entre la première partie 34 et la deuxième partie 36 du levier 28. Une telle partie 40 peut par exemple être utilisée comme moyen détrompeur, indiquant à l'utilisateur dans quel sens le levier 28 doit être introduit au sein de la cavité 32 de l'organe rotatif de sortie 30 de l'actionneur 2 comme représenté sur la figure 5. La troisième partie 40 peut également être utilisée comme un moyen de jonction ou liaison entre le cadre support 3, notamment au niveau des paliers, et le levier 28, où la troisième partie 40 du levier 28 est introduite au sein d'un palier agencé sur le cadre support 3.

Selon le mode de réalisation illustré en figure 6 et 7, l'actionneur 2 peut comprendre deux organes rotatifs de sortie 30, chacun comprenant une cavité 32, disposés sur des faces opposées dudit actionneur 2, le dispositif comprenant un unique levier 28 traversant les deux cavités 32 des organes rotatifs de sortie 30 qui soit apte à être introduit dans le creux 21 d'un tourillon de pivotement 18 de manière à entrainer la rotation simultanée de deux volets d'obturation 4. Ceci est particulièrement adapté pour des dispositifs de régulation 1 où l'actionneur 2 est agencé au centre dudit dispositif entre deux ensembles de volets d'obturation 4.

Ainsi comme illustré en figure 6, le levier 28 comprend une deuxième partie 36 apte à être introduite au sein d'un tourillon de pivotement 18 d'un volet d'obturation 4 de manière à entraîner celui-ci en rotation de par la coopération par complémentarité de forme entre ces deux éléments selon le mécanisme expliqué précédemment. La première partie 34 est apte à être introduite dans la cavité 32 de l'organe rotatif de sortie 30 de l'actionneur 2 ainsi qu'au sein d'un tourillon de pivotement 18 d'un autre volet d'obturation 4. Ainsi lorsque le levier 28 est entrainé en rotation, par l'actionneur 2 et les organes rotatifs de sortie 30, celui-ci entraine la rotation des deux volets d'obturation 4 simultanément. Le levier 28 peut également présenter une collerette 38 et une troisième partie 40 dépourvue de dentures, la première partie 34 et la deuxième partie 36 pouvant être de forme identique ou différente.

Selon le mode de réalisation représenté en figure 5, l'actionneur 2 comprend au moins deux organes rotatifs de sortie 30, chacun comprenant une cavité 32, agencés à deux faces opposées de l'actionneur 2, le dispositif de régulation 1 comprenant au moins deux leviers 28 chacun étant apte à être introduit dans une cavité 32 d'un organe rotatif de sortie 30 et dans un creux 21 d'un tourillon de pivotement 18, ceci de manière à entrainer la rotation simultanée de au moins deux volets d'obturation 4. Dans ce mode de réalisation, les leviers 28 peuvent être fixés l'un à l'autre par une fixation à emboîtage élastique.

Ainsi, les volets d'obturation 4 sont tous de forme identique et réalisés dans une seule et même matière. En effet, le levier 28 étant l'élément en coopération avec l'organe rotatif de sortie 30 de l'actionneur 2, il correspond à un élément soumis à des contraintes, en termes de torsion, qui sont plus importantes que pour les volets d'obturation 4. Tous les volets d'obturation 4, étant soumis à des contraintes moins importantes, peuvent être réalisés dans une seule et même matière qui soit moins résistante et moins onéreuse, tels que du Polyamide-6 Fibres de verre 30% (PA6 GF30). Les volets d'obturation 4 peuvent tous avoir une seule forme et une même matière identiques par souci de standardisation. Le levier 28, étant soumis à des contraintes plus importantes, doit être fabriqué dans un matériau plus résistant tel que du Polyamide-6 Fibres de verre 50% (PA GF50).

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toute combinaison des différents modes de réalisation décrits précédemment.

## Revendications

1. Volet d'obturation (4) pour dispositif de régulation (1) d'un flux d'air pour module de face avant pour véhicule automobile, comprenant :
- un panneau (10) pour faire obstacle à l'écoulement de l'air,
- un tourillon de pivotement (18) solidaire au panneau (10),
**caractérisé en ce que** le tourillon de pivotement (18) comprend un creux (21) de manière à avoir une surface externe (20) et une surface interne (22), la surface interne (22) présentant un élément de liaison (24) agencé pour lier en rotation le panneau (10) avec un organe d'entraînement (26), **caractérisé en ce que** l'élément de liaison (24) comprend une pluralité de dentures (25).

2. Dispositif de régulation (1) d'un flux d'air pour module de face avant pour véhicule automobile comprenant :
- au moins un volet d'obturation (4) selon l'une des revendications précédentes,
- un actionneur (2) comprenant au moins un organe rotatif de sortie (30) comprenant une cavité (32),
- un levier (28) comprenant une première partie (34) apte à être inséré dans ladite cavité (32) de sorte à être entraîné en rotation par ledit organe rotatif de sortie (30),
**caractérisé en ce que** le levier (28) comprend une deuxième partie (36) apte à être introduite dans le creux (21) d'un tourillon de pivotement (18) de manière à entrainer la rotation dudit volet d'obturation (4).

3. Dispositif de régulation (1) selon la revendication 3, dans lequel la première partie (34) et la seconde partie du levier (28) sont de formes différentes.

4. Dispositif de régulation (1) selon l'une des revendications 2 ou 3, dans lequel la première partie (34) et la deuxième partie (36) du levier (28) présentent chacune des dentures sur leur surface externe et sont séparées par une collerette (38).

5. Dispositif de régulation (1) selon l'une des revendications 2 à 4, dans lequel le levier (28) comprend une troisième partie (40) dépourvue de denture agencée entre la première partie (34) et la deuxième partie (36).

6. Dispositif de régulation (1) selon l'une des revendications 2 à 5, dans lequel l'actionneur (2) comprend deux organes rotatifs de sortie (30), chacun comprenant une cavité (32), disposés sur des faces opposées dudit actionneur (2), le dispositif comprenant un unique levier (28) traversant lesdites cavités (32) qui soit apte à être introduit dans un creux (21) d'un tourillon de pivotement (18) de manière à entrainer la rotation simultanée de deux volets d'obturation (4).

7. Dispositif de régulation (1) selon l'une des revendications 2 à 5, dans lequel l'actionneur (2) comprend au moins deux organes rotatifs de sortie (30), chacun comprenant une cavité (32), le dispositif comprenant au moins deux leviers (28) chacun étant apte à être introduit dans une cavité (32) d'un organe rotatif de sortie (30) et chacun étant apte à être introduit dans un creux (21) d'un tourillon de pivotement (18) de manière à entrainer la rotation simultanée de au moins deux volets d'obturation (4).

8. Dispositif de régulation (1) selon la revendication 7, dans lequel les leviers (28) sont fixés l'un à l'autre par une fixation à emboîtage élastique.

9. Dispositif de régulation (1) selon l'une des revendications 2 à 8, dans lequel les volets d'obturation (4) sont tous de forme identique et réalisés dans une même matière.

## Patentansprüche

1. Verschlussklappe (4) für eine Vorrichtung zur Regelung (1) eines Luftstroms für ein Vorbaumodul eines Kraftfahrzeugs, umfassend:
- eine Platte (10), um den Luftstrom zu behindern,
- einen Schwenkzapfen (18), der fest mit der Platte (10) verbunden ist,
**dadurch gekennzeichnet, dass** der Schwenkzapfen (18) eine Vertiefung (21) umfasst, so dass er eine Außenfläche (20) und eine Innenfläche (22) aufweist, wobei die Innenfläche (22) ein Verbindungselement (24) aufweist, das so angeordnet ist, dass es die Platte (10) drehbar mit einem Antriebsorgan (26) verbindet, **dadurch gekennzeichnet, dass** das Verbindungselement (24) mehrere Zähne (25) umfasst.

2. Vorrichtung zur Regelung (1) eines Luftstroms für ein Vorbaumodul eines Kraftfahrzeugs, umfassend:
- mindestens eine Verschlussklappe (4) nach einem der vorangehenden Ansprüche,
- ein Stellglied (2), das mindestens ein drehbares Ausgangsorgan (30) mit einem Hohlraum (32) umfasst,
- einen Hebel (28), der einen ersten Teil (34) umfasst, der in den Hohlraum (32) einführbar ist, so dass er durch das drehbare Ausgangsorgan (30) in Drehung versetzt wird, **dadurch gekennzeichnet, dass** der Hebel (28) einen zweiten Teil (36) umfasst, der in die Vertiefung (21) eines Schwenkzapfens (18) einführbar ist, um die Verschlussklappe (4) in Drehung zu versetzen.

3. Regelvorrichtung (1) nach Anspruch 3, wobei der erste Teil (34) und der zweite Teil des Hebels (28) unterschiedliche Formen aufweisen.

4. Regelvorrichtung (1) nach einem der Ansprüche 2 oder 3, wobei der erste Teil (34) und der zweite Teil (36) des Hebels (28) jeweils an ihrer Außenfläche Verzahnungen aufweisen und durch einen Kragen (38) voneinander getrennt sind.

5. Regelvorrichtung (1) nach einem der Ansprüche 2 bis 4, wobei der Hebel (28) einen dritten Teil (40) ohne Verzahnung umfasst, der zwischen dem ersten Teil (34) und dem zweiten Teil (36) angeordnet ist.

6. Regelvorrichtung (1) nach einem der Ansprüche 2 bis 5, wobei das Stellglied (2) zwei drehbare Ausgangsorgane (30) umfasst, die jeweils einen Hohlraum (32) umfassen und auf gegenüberliegenden Seiten des Stellglieds (2) angeordnet sind, wobei die Vorrichtung einen einzigen Hebel (28) umfasst, der durch die Hohlräume (32) verläuft und in eine Vertiefung (21) eines Schwenkzapfens (18) einführbar ist, um zwei Verschlussklappen (4) gleichzeitig in Drehung zu versetzen.

7. Regelvorrichtung (1) nach einem der Ansprüche 2 bis 5, wobei das Stellglied (2) mindestens zwei drehbare Ausgangsorgane (30) umfasst, die jeweils einen Hohlraum (32) umfassen, wobei die Vorrichtung mindestens zwei Hebel (28) umfasst, die jeweils in einen Hohlraum (32) eines drehbaren Ausgangsorgans (30) einführbar sind und jeweils in eine Vertiefung (21) eines Schwenkzapfens (18) einführbar sind, um mindestens zwei Verschlussklappen (4) gleichzeitig in Drehung zu versetzen.

8. Regelvorrichtung (1) nach Anspruch 7, wobei die Hebel (28) durch eine elastische Steckbefestigung aneinander befestigt sind.

9. Regelvorrichtung (1) nach einem der Ansprüche 2 bis 8, wobei die Verschlussklappen (4) alle dieselbe Form aufweisen und aus dem gleichen Material gefertigt sind.

## Claims

1. Shut-off flap (4) for a regulating device (1) for regulating an air stream for a motor vehicle front-end module, comprising:
- a panel (10) for blocking the flow of air,
- a pivot journal (18) secured to the panel (10), **characterized in that** the pivot journal (18) comprises a hollow (21) so as to have an external surface (20) and an internal surface (22), the internal surface (22) having a connecting element (24) designed to connect the panel (10) and a drive member (26) in rotation, **characterized in that** the connecting element (24) comprises a plurality of sets of teeth (25).

2. Regulating device (1) for regulating an air stream for a motor vehicle front-end module, comprising:
- at least one shut-off flap (4) according to one of the preceding claims,
- an actuator (2) comprising at least one rotary output member (30) comprising a cavity (32),
- a lever (28) comprising a first part (34) able to be inserted into said cavity (32) so as to be driven in rotation by said rotary output member (30),
**characterized in that** the lever (28) comprises a second part (36) able to be introduced into the hollow (21) of a pivot journal (18) so as to cause said shut-off flap (4) to rotate.

3. Regulating device (1) according to Claim 3, wherein the first part (34) and the second part of the lever (28) have different shapes.

4. Regulating device (1) according to either of Claims 2 and 3, wherein the first part (34) and the second part (36) of the lever (28) each have sets of teeth on their external surface and are separated by a collar (38).

5. Regulating device (1) according to one of Claims 2 to 4, wherein the lever (28) comprises a third part (40) devoid of a set of teeth which is arranged between the first part (34) and the second part (36) .

6. Regulating device (1) according to one of Claims 2 to 5, wherein the actuator (2) comprises two rotary output members (30), each comprising a cavity (32), which are disposed on opposite faces of said actuator (2), the device comprising a single lever (28) passing through said cavities (32) which is able to be introduced into a hollow (21) of a pivot journal (18) so as to cause two shut-off flaps (4) to rotate simultaneously.

7. Regulating device (1) according to one of Claims 2 to 5, wherein the actuator (2) comprises at least two rotary output members (30), each comprising a cavity (32), the device comprising at least two levers (28) which are each able to be introduced into a cavity (32) of a rotary output member (30) and which are each able to be introduced into a hollow (21) of a pivot journal (18) so as to cause at least two shut-off flaps (4) to rotate simultaneously.

8. Regulating device (1) according to Claim 7, wherein the levers (28) are fastened to one another by an elastic fitted fastening.

9. Regulating device (1) according to one of Claims 2 to 8, wherein the shut-off flaps (4) all have an identical shape and are made from the same material.
